# EUROPÄISCHE PATENTANMELDUNG

(11) **EP 3 466 737 A1**
(43) Veröffentlichungstag der Anmeldung: **10.04.2019**
(21) Anmeldenummer: 18193007.4
(22) Anmeldetag: 06.09.2018
(51) Int. Cl.: B60K 7/00, B60K 17/04, B60K 17/30

(54) **ANTRIEBSVORRICHTUNG FÜR EIN FLURFÖRDERFAHRZEUG**

(30) Priorität: 08.09.2017 DE 102017008439
(71) Anmelder: Kordel Antriebstechnik GmbH, 48249 Dülmen (DE)
(72) Erfinder: Raue, Josef, 48249 Dülmen (DE)
(74) Vertreter: Demski, Siegfried

(57) **Zusammenfassung**

Die Erfindung betrifft eine Antriebsvorrichtung 1 für ein Flurförderfahrzeug, umfassend zumindest einen Antriebsmotor 2 und ein Getriebegehäuse mit mindestens einer Getriebestufe 3, 4 zum Antrieb wenigstens eines Laufrades 18. Um eine höhere Untersetzung zu ermöglichen und ein höheres Drehmoment zu übertragen ist erfindungsgemäß vorgesehen, dass die erste Getriebestufe 3 aus einem Planetengetriebe 5, reduzierten Planetengetriebe oder Wolfrom-Getriebe besteht, bei dem der Antrieb über das Sonnenrad 6 und der Abtrieb über den Planetenträger 8 erfolgt, wobei das Hohlrad drehfest mit dem Drehkranzlagerinnenring 10 verbunden ist. Durch die Wahl eines Planetengetriebes, reduzierten Planetengetriebes oder Wolfrom-Getriebes werden die gewünschten Vorteile der Antriebsvorrichtung 1 erreicht, wobei insbesondere durch die Wahl des Antriebs über das Sonnenrad und des Abtriebs über den Planetenträger im Zusammenhang mit einem drehfest mit dem Drehkranzlagerinnenring verbundenen Hohlrad die Anzahl der Einzelkomponenten deutlich verringert werden kann.

## Beschreibung

Die Erfindung betrifft eine Antriebsvorrichtung für ein Flurförderfahrzeug, umfassend zumindest einen Antriebsmotor und ein Getriebegehäuse mit mindestens einer Getriebestufe zum Antrieb wenigstens eines Laufrades und einem Drehkranzlager.

Flurförderfahrzeuge, auch Gabelstapler genannt, dienen zum Heben, Stapeln und Transportieren von Warengütern. Größere Flurförderfahrzeuge sind hierbei so konstruiert, dass der Bediener auf dem Flurförderfahrzeug aufsitzen kann - diese Geräte sind dann normalerweise auch mit einer Lenkunterstützung, z.B. einem elektrischen Lenkantrieb versehen. Bei kleineren Flurförderfahrzeugen handelt es sich oft um Mitgehgeräte, bei denen eine Fahrzeugdeichsel direkt an dem Fahrantrieb des Gabelstaplers befestigt ist. Hier erfolgt demzufolge die Fahrzeuglenkung ohne eine Lenkhilfe.

Aus der DE 10 2012 214 193 A1 ist beispielsweise eine lenkbare Antriebsvorrichtung für Flurförderfahrzeuge bekannt, welche mit einer Antriebseinrichtung und einer Lenkeinrichtung ausgestattet ist. Über ein Drehkranzlager wird eine drehbewegliche Aufhängung für die Antriebseinrichtung und Lenkeinrichtung erreicht, wobei beispielsweise der Drehkranzlageraußenring mit dem Chassis des Flurförderfahrzeuges verbunden ist.

Aus der EP 1 725 415 B1 ist ein Lenk- und Radantrieb für ein Flurförderfahrzeug bekannt. Der Antrieb erfolgt über einen Fahrmotor und zwei Stirnräder, wobei der Fahrmotor, der Lenkmotor und das Lenkgetriebe koaxial hintereinander angeordnet sind.

Aus der DE 10 2013 200 388 A1 ist ein Antrieb für ein Flurförderfahrzeug mit Lenkunterstützung bekannt. In diesem Fall handelt es sich um ein Flurförderfahrzeug mit Deichsel, die von einem Bediener zur Steuerung der Fahrtrichtung und des Antriebsmotors verwendet wird. Die Deichsel ist in diesem Fall mit einem bei einer Lenkbewegung des Rades mitdrehenden Bauteil bezüglich der Lenkachse drehfest verbunden.

Die aus dem Stand der Technik bekannten Antriebsvorrichtungen verwenden einen axial angeordneten oder gegebenenfalls querliegenden Fahrmotor mit einem Untersetzungsgetriebe. Diese Antriebsvorrichtungen zeichnen sich dadurch aus, dass das verwendete Drehkranzlager beziehungsweise Schwenklager einen entsprechend großen Wälzkreisdurchmesser aufweist, wodurch ein relativ großer Schwenkradius des Fahrgetriebes erforderlich ist. Bei einem kleineren Wälzkreisdurchmesser des Drehkranzlagers und somit in Folge auch einem kleineren Schwenkradius des Fahrgetriebes besteht nicht mehr die Möglichkeit, dass der Motor weitestgehend in das Drehkranzlager eintaucht. Somit vergrößert sich die Baulänge der gesamten Antriebsvorrichtung. Ferner ist die Übertragung des Drehmomentes durch die jeweilige Bauart begrenzt.

Der vorliegenden Erfindung liegt daher die Aufgabe zugrunde, eine neue Antriebsvorrichtung für Flurförderfahrzeuge aufzuzeigen, welche die Übertragung eines höheren Drehmomentes ermöglicht, ohne dass die Baulänge der Antriebsvorrichtung vergrößert wird.

Erfindungsgemäß ist zur Lösung der Aufgabe vorgesehen, dass die erste Antriebsstufe aus einem Planetengetriebe, reduzierten Planetengetriebe oder Wolfram-Getriebe besteht, bei dem der Antrieb über das Sonnenrad und der Abrieb über den Planetenträger erfolgt, wobei das Hohlrad drehfest mit dem Drehkranzlagerinnenring verbunden ist. Weitere vorteilhafte Ausgestaltungen der Antriebsvorrichtung sind aus den Unteransprüchen zu entnehmen.

Durch die Verwendung einer ersten Antriebsstufe, bestehend aus einem Planetengetriebe, reduziertem Planetengetriebe oder einem Wolfram-Getriebe kann die relativ hohe Drehzahl des Antriebsmotors einerseits deutlich reduziert werden und andererseits kann durch eine solche Antriebsstufe ein hohes Drehmoment übertragen werden. Ein hohes Drehmoment ist gerade bei Flurförderfahrzeugen wichtig, weil die Flurförderfahrzeuge zum Transportieren von Lasten vorgesehen sind. Zur Erreichung der hohen Drehmomentübertragung und erforderlichen Untersetzung eignen sich Planetengetriebe, gegebenenfalls auch reduzierte Planetengetriebe oder Wolfram-Getriebe. Damit die Baulänge der Getriebeeinheit nicht vergrößert wird, gegebenenfalls sogar reduziert werden kann und die Anzahl der Einzelteile ebenfalls reduziert werden kann, um beispielsweise Kosten zu sparen, erfolgt der Antrieb der Getriebestufe über das Sonnenrad und der Abtrieb über den Planetenträger. Hierbei ist insbesondere vorgesehen, dass das Hohlrad drehfest mit dem Drehkranzlager-innenring verbunden ist. Eine solche Ausführung ist besonders für Mitgehgeräte mit einer Fahrzeugdeichsel von Vorteil, weil wenige Bauteile notwendig sind und eine kompakte Baueinheit geschaffen wird, wobei die Fahrzeugdeichsel an einem Element der Antriebsvorrichtung befestigt wird.

In weiterer Ausgestaltung der Erfindung ist vorgesehen, dass das Getriebegehäuse mit wenigstens einer weiteren Getriebestufe zum Antrieb eines Laufrades ausgestattet und über ein Drehkranzlageraußenring mit einem Chassis des Flurförderfahrzeuges verbunden ist. Der Drehkranzlageraußenring ist hierbei zur Montage mit dem Chassis vorgesehen, während demgegenüber der Drehkranzlagerinnenring zur Aufnahme des Getriebegehäuses verwendet wird. Hierbei besteht die Möglichkeit, dass der Drehkranzlagerinnenring bereits als Motorschild ausgebildet ist oder alternativ ein separates Motorschild mit dem Drehkranzlagerinnenring verbunden ist. Bei der ersten Variante kann eine weitere Reduzierung der einzelnen Komponenten der Antriebsvorrichtung erfolgen, um eine Kosteneinsparung zu erzielen.

Anstelle der sonst üblichen Stirnradverzahnung für eine erste Getriebestufe mit einem Antriebsritzel und einem Stirnrad wird erfindungsgemäß ein Planetengetriebe, reduziertes Planetengetriebe oder ein Wolfram-Getriebe verwendet. Die vorgenannten Getriebe weisen gegenüber einem Stirnradsatz den Vorteil einer hohen Untersetzungsmöglichkeit und der Übertragung eines hohen Drehmomentes auf. Die Baugröße einer solchen Getriebestufe für ein Flurförderfahrzeug ermöglicht es, dass der Wälzkreisdurchmesser des Drehkranzlagers verkleinert werden kann. Nicht nur, dass diese Verkleinerung den Schwenkradius des Getriebes nochmals reduziert, wird durch die höhere Untersetzung des Getriebes ermöglicht, dass ein von der Baugröße her kleinerer Fahrmotor eingesetzt werden kann, welcher wiederum nochmals zu einer deutlichen Reduzierung des Bauraums im Flurförderfahrzeug führt. Auch ermöglicht die Verwendung eines kleineren Motors eine Kostenreduzierung bei der Motorenfertigung.

Mithilfe des Planetengetriebes kann eine hohe Untersetzung vorgenommen werden, wodurch ein entsprechend hohes Drehmoment übertragen werden kann. Speziell im Fall der Gabelhubwagen, welche für geringere Lasten ausgelegt sind reicht, ein wesentlich kleineres Drehmoment aus, sodass eine Reduzierung der Motorgröße möglich ist. Durch eine Planetenstufe kann ferner eine deutliche Verringerung des Außendurchmessers der ersten Getriebestufe erreicht werden kann, was zu geringeren Abmessungen der Antriebsvorrichtung führt. Darüber hinaus besteht die Möglichkeit, mithilfe der Planetenstufe den Bauraum im oberen Bereich des Getriebes nochmals erheblich zu reduzieren, wobei durch das Planetengetriebe die Untersetzung der ersten Getriebestufe im Gegensatz zu einer Stirnradverzahnung deutlich erhöht werden kann.

In Ausgestaltung der Getriebestufe besteht ferner die Möglichkeit, sowohl eine Stirnradstufe als auch eine Planetenstufe miteinander zu kombinieren, um die Vorteile eines hohen Drehmomentes und einer großen Untersetzung zu erreichen. Dabei ist vorgesehen, dass das Antriebsrad mittig zum Drehkranzlager vertikal positioniert ist, um eine Lenkbeeinflussung auszuschließen, wobei der Drehkranzlagerinnenring in der Regel gleichzeitig einen Teil des Gehäuses bildet.

In allen vorgenannten Ausführungsvarianten steht hierbei eine kompakte Bauweise im Vordergrund, welche zusätzlich im Fall der Gabelhubwagen einen Deichselanschluss ermöglichen sollen. Bei der Verwendung eines Planetengetriebes kann im Weiteren ein Verschluss des Getriebegehäuses durch die Planetenstufe und ein Motorschild erfolgen, sodass eine Trennfuge entfällt und damit die Abdichtung wesentlich einfacher gestaltet werden kann.

Ein weiterer wesentlicher Vorteil dieser Bauweise ergibt sich dadurch, dass gegenüber dem Drehkranzlageraußenring eine wesentlich geringere Flächenpressung vorliegt und eine Verspannung vermieden wird. Dies ist ein entscheidender Vorteil, weil die Chassis der Flurförderfahrzeuge immer einfacher gebaut werden, sodass eine ebene Planfläche für den Anschluss des Drehkranzlagerinnenrings nicht immer vorhanden ist. Soweit die ebene Fläche nicht perfekt ausgebildet ist, könnte daher beim Verschrauben eine Verspannung des Drehkranzlageraußenringes vorliegen, die nicht erwünscht ist. Wenn eine solche Verspannung vermieden werden kann, besteht unter Umständen hierbei die Möglichkeit, auf eine Härtung des Drehkranzlageraußenringes zu verzichten.

Bei der Verwendung einer Planetenstufe als erste Getriebestufe ist es weiterhin denkbar, dass man den Ölhaushalt des klassischen Einradtriebswerks teilt und die Planetenstufe mit Öl versorgt und die Kegelradstufe mit einer geringeren Ölmenge ausstattet. Dies bedeutet natürlich, weil nicht mehr der komplette Kegelradsatz in Öl getaucht ist, sodass eine Reduzierung der Ölmenge im Getriebe möglich ist. Soweit zu diesem Zweck zur Abgrenzung des oberen Ölraumes des Planetengetriebes zum Kegelradsatz hin eine Wellendichtung erforderlich wird, ist dies durch die erzielbaren Vorteile hinnehmbar. Anstelle eines Planetengetriebes könnte alternativ auch ein Exentergetriebe, ein reduziertes Planetengetriebe oder ein Wolfraumgetriebe mit den gleichen Vorteilen eingesetzt werden.

In weiterer besonderer Ausgestaltung ist vorgesehen, dass eine Deichsel über einen Deichseladapter mit dem Antriebsmotor, Drehkranzlagerinnenring oder Getriebegehäuse verbunden ist. Die Deichsel dient zur Ausführung einer Lenkbewegung des Flurförderfahrzeuges, soweit der Bediener neben dem Flurförderfahrzeug hergeht. Gleichzeitig wird über die Deichsel auch der Fahrmotor über eine entsprechende Schalteinheit aktiviert, beziehungsweise deaktiviert.

In weiterer besonderer Ausgestaltung der Erfindung ist vorgesehen, dass der Antriebsmotor gegenüber der Vertikalen unter einem Winkel angeordnet ist. Der gewählte Winkel kann im Bereich von 15 bis 25 Grad liegen, wobei vorzugsweise 20 bis 23 Grad, besonders bevorzugt 21 Grad verwendet werden.

Durch die Schrägstellung des Antriebsmotors besteht die Möglichkeit, dass die Deichsel über einen Deichseladapter unmittelbar mit dem Drehkranzlagerinnenring oder dem Motorschild neben dem Antriebsmotor verbunden wird, wobei vorzugsweise der Deichseladapter aus einer Hülse besteht, die zur Verschraubung vorgesehen ist. Durch die Schrägstellung des Antriebsmotors wird hierbei in unmittelbarer Nähe des Drehkranzlagerinnenrings ein Freiraum geschaffen, der die Möglichkeit des Anschlusses einer Deichsel, insbesondere über einen Deichseladapter ermöglicht, wodurch die aufzubringende Lenkbewegung unmittelbar an den Drehkranzlagerinnenring beziehungsweise das Motorschild übertragen wird. Durch diese Maßnahme können beispielsweise Leichtbauvarianten der Antriebsmotoren eingesetzt werden. Alternativ besteht die Möglichkeit, dass ein Anschlussadapter verwendet wird, welcher die Möglichkeit bietet, die Deichsel seitlich anzuflanschen. Der Durchmesser muss zu diesem Zweck nicht vergrößert werden, sodass der Hüllradius nicht überschritten wird. Lediglich die Bauhöhe vergrößert sich etwas, ist aber für beispielsweise Gabelhubwagen unwesentlich.

Die Laufräder weisen in der Regel einen Durchmesser von ca. 230 mm auf und geben damit einen Hüllkreis vor, der nach Möglichkeit nicht überschritten werden sollte. Aus diesem Grunde muss die Deichsel nach Möglichkeit in dem Hüllkreis angeordnet werden, damit auch in engen Räumlichkeiten eine optimale Lenkung des Gabelhubwagens möglich ist, und zwar sowohl mit als auch ohne Transportgut. Dieses Hüllmaß wird bei einem schräggestellten Antriebsmotor, beispielsweise unter einem Winkel von 21° gegenüber der Vertikalen, nicht überschritten und bietet ausreichend Platz zur Befestigung der Deichsel.

Die Verwendung einer Deichsel in Verbindung mit der Schrägstellung des Antriebsmotors gestaltet sich in diesem Fall wesentlich leichter als bei herkömmlichen Antriebsvorrichtungen. Bekannt ist beispielsweise, die Deichsel unmittelbar an den Antriebsmotor anzuflanschen, wodurch aber erhöhte Anforderungen an die Stabilität des Gehäuses des Antriebsmotors gestellt werden. Eine Anflanschung der Deichsel an den Drehkranzlagerinnenring bei einer herkömmlichen Position des Antriebsmotors führt in der Regel zu einer weiteren Vergrößerung des Durchmessers, wenn eine axial verlängerte Bauweise der Antriebsvorrichtung nicht möglich ist.

Das Fahrgetriebe besteht hierbei aus einer ersten Planetengetriebestufe, während die zweite Getriebestufe aus einem Kegelradsatz besteht. Eine Antriebswelle, welche die erste und zweite Getriebestufe verbindet, wird hierbei ebenfalls schräg angeordnet, wobei durch den Kegelradsatz der zweiten Getriebestufe keine Vergrößerung des Getriebegehäuses erforderlich ist.

Die vorliegende Erfindung zeichnet sich im Wesentlichen dadurch aus, dass durch die Verwendung eines Planetengetriebes, reduzierten Planetengetriebes oder eines Wolfram-Getriebes eine hohe Untersetzung gewählt werden kann und darüber hinaus ein hohes Drehmoment übertragbar ist. Unter Beibehaltung der Baugröße oder Verkleinerung des Getriebegehäuses einschließlich Antriebsmotors kann der Wälzkreisdurchmesser des Schwenklagers somit erheblich verkleinert werden und damit der Schwenkradius des Fahrgetriebes signifikant verringert werden. Soweit zusätzlich eine Schrägstellung des Antriebsmotors gewählt wird, werden weitere erhebliche Vorteile bei den neuen Antriebsvorrichtungen erreicht. Die Antriebsachse des Kegelradsatzes ist hierbei fluchtend zu dem Antriebsmotor angeordnet und führt durch die Schrägstellung zu einem deutlich geringeren Schwenkradius des Fahrgetriebes. Die Kombination mit den weiteren Merkmalen der Unteransprüche wird darüber hinaus zu einer kostengünstigen Variante der Antriebsvorrichtung ohne auf die genannten Vorteile zu verzichten, und zwar die Erzielung eines kompakten Getriebes und ein geringer Wendekreis durch den geringen Schwenkradius. Im Weiteren ist bei dieser Art von Antriebsvorrichtungen die Möglichkeit der Befestigung einer Deichsel gegeben, sodass die Antriebsvorrichtung auch für Mitgehgeräte verwendet werden kann.

Die Erfindung wird im Weiteren anhand einer Figur nochmals erläutert.

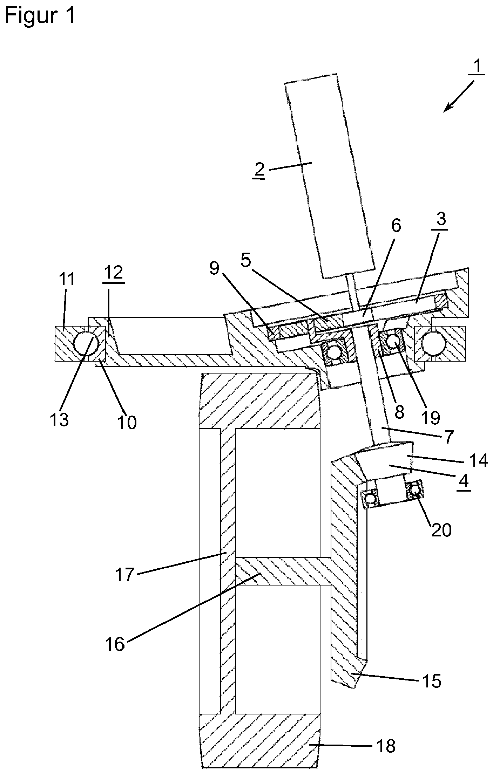

Es zeigt
- Fig. 1: in einer geschnittenen Ansicht eine Antriebsvorrichtung für ein Flurförderfahrzeug.

Figur 1 zeigt in einer geschnittenen Ansicht eine Antriebsvorrichtung 1 für ein nicht dargestelltes Flurförderfahrzeug. Die Antriebsvorrichtung 1 umfasst hierbei einen Antriebsmotor 2, welcher aus einem Elektromotor besteht und einer ersten Getriebestufe 3 sowie einer zweiten Getriebestufe 4. Zur besseren Veranschaulichung ist die Antriebsvorrichtung ohne Getriebegehäuse dargestellt, sodass lediglich die einzelnen Komponenten des Getriebes ersichtlich sind. Die erste Antriebstufe 3 besteht im gezeigten Ausführungsbeispiel aus einem Planetengetriebe 5, bei dem der Antrieb durch den Antriebsmotor 2 über das Sonnenrad 6 erfolgt und der Abtrieb über eine Antriebswelle 7, welche mit einem Planetenträger 8 verbunden ist. Das Hohlrad 9 ist im gezeigten Ausführungsbeispiel drehfest mit dem Drehkranzlagerinnenring 10 verbunden, welcher gleichzeitig das Motorschild des Antriebsmotors 2 bildet. Der Drehkranzlagerinnenring 10 sowie der Drehkranzlageraußenring 11 bilden hierbei das Drehkranzlager 12, wobei der Drehkranzlagerinnenring 10 und der Drehkranzlageraußenring 11 über Lagerelemente 13 drehbar gelagert sind. Der Drehkranzlageraußenring 11 ist zur Montage mit dem Chassis eines Flurförderfahrzeuges vorgesehen, während der Drehkranzlagerinnenring 10 als Einzelteil mit dem oberen Getriebegehäuse beziehungsweise Motorschild des Antriebsmotors 2 verbunden ist. Alternativ besteht die Möglichkeit, dass der Drehkranzlagerinnenring 10 einstückig ausgebildet ist und somit gleichzeitig das Motorschild und die obere Getriebegehäuseabdeckung bildet.

Die zweite Getriebestufe 4 besteht aus einem ersten Kegelrad 14 und einem zweiten Kegelrad 15, welche miteinander kämmen, wobei die Antriebswelle 7 fluchtend zu dem Antriebsmotor 2 angeordnet ist und somit ebenfalls schräg verläuft. Das Kegelrad 15 besitzt eine einstückig angeformte Abtriebswelle 16, welche mit einem Radträger 17 verbunden ist. Der Radträger 17 dient zur Befestigung eines Laufrades 18. Das Laufrad 18 mit einer horizontalen Drehachse wird über den Antriebsmotor 2 und die erste und zweite Getriebestufe 3, 4 angetrieben, wobei eine Lenkbewegung des Laufrades 18 durch ein nicht dargestelltes Lenkgetriebe oder eine nicht dargestellte Deichsel erfolgen kann, welche beispielsweise mit dem oberen Gehäusedeckel verbunden sein kann. Die Lagerung des Kegelrades 5 ist aus dieser Zeichnung nicht ersichtlich, aber die Lagerung der Antriebswelle 7 mit einem oberen und unteren Lagerelemente 19, 20.

Der besondere Vorteil der vorliegenden Erfindung besteht darin, dass durch die Schrägstellung des Antriebsmotors 2 gegenüber der Vertikalen das Bauvolumen der gesamten Antriebsvorrichtung 1 reduziert und darüber hinaus der Wälzkreisdurchmesser des Drehkranzlagers erheblich verkleinert werden kann und damit ebenso der Schwenkradius des Flurförderfahrzeuges signifikant verringert wird.

### Bezugszeichenliste

- 1: Antriebsvorrichtung
- 2: Antriebsmotor
- 3: erste Getriebestufe
- 4: zweite Getriebestufe
- 5: Planetengetriebe
- 6: Sonnenrad
- 7: Antriebswelle
- 8: Planetenträger
- 9: Hohlrad
- 10: Drehkranzlagerinnenring
- 11: Drehkranzlageraußenring
- 12: Drehkranzlager
- 13: Lagerelement
- 14: Kegelrad
- 15: Kegelrad
- 16: Antriebswelle
- 17: Radträger
- 18: Laufrad
- 19: Lagerelement
- 20: Lagerelement

## Patentansprüche

1. Antriebsvorrichtung (1) für ein Flurförderfahrzeug, umfassend zumindest einen Antriebsmotor (2) und ein Getriebegehäuse mit mindestens einer Getriebestufe (3, 4) zum Antrieb wenigstens eines Laufrades (18) und einem Drehkranzlager (12),
**dadurch gekennzeichnet,**
**dass** die erste Antriebsstufe aus einem Planetengetriebe (5), reduzierten Planetengetriebe oder Wolfram-Getriebe besteht, bei dem der Antrieb über das Sonnenrad (6) und der Abrieb über den Planetenträger (8) erfolgt, wobei das Hohlrad drehfest mit dem Drehkranzlagerinnenring (10) verbunden ist.

2. Antriebsvorrichtung (1) nach Anspruch 1 ,
**dadurch gekennzeichnet,**
**dass** das Getriebegehäuse mit wenigstens einer weiteren Getriebestufe (3, 4) zum Antrieb eines Laufrades (18) ausgestattet und über ein Drehkranzlageraußenring (11) mit einem Chassis des Flurförderfahrzeuges verbunden ist.

3. Antriebsvorrichtung (1) nach Anspruch 1 oder 2,
**dadurch gekennzeichnet,**
**dass** der Drehkranzlageraußenring (11) zur Montage mit dem Chassis vorgesehen ist.

4. Antriebsvorrichtung (1) nach einem der Ansprüche 1, 2 oder 3,
**dadurch gekennzeichnet,**
**dass** das Motorschild als Drehkranzlagerinnenring (10) ausgebildet ist, oder dass das Motorschild mit einem Drehkranzlagerinnenring (10) verbunden ist.

5. Antriebsvorrichtung (1) nach einem der Ansprüche 1 bis 4,
**dadurch gekennzeichnet,**
**dass** das Hohlrad gleichzeitig das Motorschild des Antriebsmotors (2) bildet.

6. Antriebsvorrichtung (1) nach einem der Ansprüche 1 bis 5,
**dadurch gekennzeichnet,**
**dass** der Antriebsmotor (2) gegenüber der Vertikalen unter einem Winkel angeordnet ist.

7. Antriebsvorrichtung (1) nach einem der Ansprüche 1 bis 6,
**dadurch gekennzeichnet,**
**dass** der Antriebsmotor (2) gegenüber der Vertikalen einen Winkel von 15 bis 25 Grad, vorzugsweise 20 bis 23 Grad, besonders bevorzugt von 21 Grad aufweist.

8. Antriebsvorrichtung (1) nach einem der Ansprüche 1 bis 7,
**dadurch gekennzeichnet,**
**dass** die Antriebswelle (7) der zweiten Getriebestufe (8) über zwei kämmende Kegelräder (14, 15) das Drehmoment auf das Laufrad (18) überträgt.

9. Antriebsvorrichtung (1) nach einem der Ansprüche 1 bis 8,
**dadurch gekennzeichnet,**
**dass** eine Deichsel über einen Deichseladapter mit dem Antriebsmotor (2), Drehkranzlagerinnenring (10) oder Getriebegehäuse verbunden ist.

10. Antriebsvorrichtung (1) nach einem der Ansprüche 1 bis 9,
**dadurch gekennzeichnet,**
**dass** der Deichseladapter aus einer Hülse besteht, welche mit dem Drehkranzlagerinnenring (10) oder mit dem Motorschild verbunden ist.
